# EUROPEAN PATENT APPLICATION

(11) **EP 2 612 986 A2**
(43) Date of publication of application: **10.07.2013**
(21) Application number: 11822027.6
(22) Date of filing: 24.05.2011
(51) Int. Cl.: F01D 1/34, F01D 25/00, F01D 9/02

(54) **REACTION-TYPE TURBINE**

(30) Priority: 04.11.2010 KR 20100109428; 31.08.2010 KR 20100085127
(71) Applicant: HK Turbine Co., Ltd, Gyeonggi-do 431-060 (KR)
(72) Inventor: KIM, Ki Tae, Yongin-si Gyeonggi-do 448-753 (KR); CHANG, Young Il, Anyang-si Gyeonggi-do 431-060 (KR); KIM, Je Ho, Ansan-si Gyeonggi-do 426-872 (KR)
(74) Representative: Karlsson, Leif Gunnar Börje
(86) International application number: PCT/KR2011/003786
(87) International publication number: WO 2012/030052

(57) **Abstract**

According to the present invention, a reaction-type turbine includes: a housing including a housing passage between an inlet and an outlet; a turbine shaft rotatably coupled to the housing to transmit torque; and at least one nozzle assembly coupled to the turbine shaft and rotatably provided in the housing passage. The nozzle assembly includes circumferential injection holes therein for injecting a high-pressure fluid in a circumferential direction and generating torque. Accordingly, when turbines having different capacities are manufactured, common parts can be compatibly used and assembling efficiency is improved. In addition, the eccentric rotation of the turbine shaft is prevented to significantly improve the durability of the reaction-type turbine. Furthermore, since the injection holes are long, the reaction-type turbine can be miniaturized and the efficiency thereof is improved.

## Description

### Technical Field

The present invention relates to a reaction-type turbine using a reaction caused by the injection of steam, gas or compressed air.

### Background Art

A steam turbine is a motorized device used to convert thermal energy from pressurized steam into mechanical motion. Due to low vibration, great efficiency, and high-speed and large-horsepower, the steam turbine has been widely used as a main engine for thermal power plants and ships.

The steam turbine injects high-temperature and high-pressurized steam produced by a boiler from nozzles or fixed blades, and expands the steam to generate a steam flow at high velocity. Then, the high-velocity steam flow is directed to strike turbine blades, which results in impact or reaction that drives a shaft to rotate. Thus, the steam turbine may include a plurality of nozzles to convert thermal energy from steam into velocity energy and a plurality of turbine blades arranged in parallel to the nozzles to convert the velocity energy into mechanical motion.

In the conventional steam turbine, high-pressure steam flowing into a steam chest from a boiler expands, and the expanding steam rotates a turbine shaft coupled to the turbine blades as passing through the nozzles and the turbine blades, and then moves to an exhaust chest. The high-pressure steam expands in the process of passing through the nozzles and turbine blades, thereby decreasing its pressure, and the pressure reduced steam is fed from the exhaust chest to a condenser to be cooled, and then may be returned to the boiler by a feedwater pump or may be exhausted to atmosphere.

However, the conventional steam turbine as described above is characterized in generating rotation torque by a flow of a high velocity steam striking turbine blades that rotate at a high speed, and thus when condensate water is mixed with the steam, the turbine blades may be damaged. Hence, the steam flowing into the turbine blades is required to be managed, avoiding the condensate water being generated. Further, the turbine blades need to be manufactured with expensive materials with high strength, thereby increasing the manufacturing cost.

A force to rotate the turbine axis is in proportion to momentum of steam entering the turbine blades, and the momentum of the steam is determined by various factors, such as the number and the surface area of the turbine blades and an inlet angle of the steam. However, since the steam striking the turbine blades changes velocity and direction, designing the shapes and angles of the blades in consideration of these changes increases design complexity, and thus there is a limitation in manufacturing a high-efficiency turbine.

Moreover, since a plurality of turbine blades rotate, enclosed by a housing, a space should be provided between an end of each turbine blade and an inner circumference of the housing in consideration of a thermal expansion of the turbine blade. However, steam is leaked through the space, and therefore a loss of pressure occurs, thereby deteriorating a thermal efficiency of the turbine.

### Technical Problem

The present invention is to provide a reaction-type turbine suitable to manufacture turbines having different capacities since common parts of the turbine can be compatibly used in manufacturing turbines with different capacities.

The present invention is also to provide a semi-permanent reaction-type turbine whose parts are easy to assemble and whose turbine shaft is prevented from rotating eccentrically.

The present invention is also to provide a reaction-type turbine with a reduced overall size, whose parts are easy to assemble and whose efficiency is improved.

The present invention is also to provide a reaction-type turbine capable of reducing thrust friction thereof by cancelling an axial thrust load of steam.

The present invention is also to provide a reaction-type turbine capable of switching a direction of steam injection, thereby enabling a turbine shaft to rotate forward or backward.

### Technical Solution

The present invention provides a reaction-type turbine comprising: a turbine shaft; and a plurality of nozzle assemblies stacked in an axial direction of the turbine shaft and coupled and integrated to the turbine shaft, each nozzle assembly having at least one injection hole therein to inject a working fluid and rotating while injecting the working fluid.

The present invention also provides a reaction-type turbine comprising: a housing including a housing inlet, a housing outlet and a housing passage connecting the housing inlet and the housing outlet to allow a high-pressure working fluid introduced through the housing inlet to flow to the housing outlet; a turbine shaft rotatably coupled to the housing; and at least one nozzle assembly rotatably housed in the housing passage, thereby being integrally coupled to the turbine shaft, having at least one injection hole for injecting the working fluid, and thereby being able to rotate, wherein each of the at least one nozzle assembly includes a plurality of plates overlapping and coupled to one another and the injection hole is formed on an overlapping surface of the plates.

The present invention also provides a reaction-type turbine comprising: a housing including a housing inlet, a housing outlet and a housing passage connecting the housing inlet and the housing outlet to allow a high-pressure working fluid introduced through the housing inlet to flow to the housing outlet; a turbine shaft rotatably coupled to the housing; and at least one nozzle assembly rotatably housed in the housing passage, thereby being integrally coupled to the turbine shaft, having at least one injection hole for injecting the working fluid, and thereby being able to rotate, wherein the housing includes a plurality of either or both of the housing inlet and the housing outlet and the plurality of either or both of the housing inlet and the housing outlet are arranged symmetrically around an axial direction of the turbine shaft.

The present invention also provides a reaction-type turbine comprising: a housing including a housing inlet, a housing outlet and a housing passage connecting the housing inlet and the housing outlet to allow a high-pressure working fluid introduced through the housing inlet to flow to the housing outlet; a turbine shaft rotatably coupled to the housing; and at least one nozzle assembly rotatably housed in the housing passage, thereby being integrally coupled to the turbine shaft, having at least one injection hole for injecting the working fluid, and thereby being able to rotate, wherein the housing inlet is formed at a rotational center of the nozzle assembly in an axial direction and the housing outlet is placed at a position of an outer circumference of the nozzle assembly, winding in a circumferential direction.

Additional features of the invention will be set forth in the description which follows, and in part will be apparent from the description, or may be learned by practice of the invention.

### Advantageous Effects

According to the present invention, a reaction-type turbine has parts that can be easily compatibly used in manufacturing turbines having different capacities, and the assembling efficiency is improved. In addition, the eccentric rotation of a turbine shaft is prevented to significantly improve the durability of the reaction-type turbine. Also, since the parts can be easily assembled and injection holes are designed to be long, injection efficiency is increased, and thereby it is feasible to manufacture a smaller turbine with high efficiency. Further, since different-sized nozzles can be detachably installed on ends of the injection holes, it is easy to change the capacity of the turbine.

### Description of Drawings

The accompanying drawings, which are included to provide a further understanding of the invention and are incorporated in and constitute a part of this specification, illustrate embodiments of the invention, and together with the description serve to explain the principles of the invention.
FIG. 1 is a perspective view of an exterior of a reaction-type turbine according to the present invention.
FIG. 2 is a perspective view of a middle portion of the reaction-type turbine of FIG. 1.
FIG. 3 is an exploded perspective view showing the reaction-type turbine of FIG. 1.
FIG. 4 is a cross-sectional view of the reaction-type turbine of FIG. 1.
FIG. 5 is an expanded view of an example of an inner circumference of a third housing of the reaction-type turbine of FIG. 1.
FIG. 6 is an expanded view of another example of the inner circumference of the third housing of the reaction-type turbine of FIG. 1.
FIG. 7 is an exploded perspective view of a unit nozzle assembly of the reactor-type turbine shown in FIG. 1.
FIG. 8 is a cross-sectional view of assembled unit nozzle assemblies of FIG. 7.
FIG. 9 is a top view of a nozzle cover of the unit assembly of FIG. 7.
FIG. 10 is a cross-sectional view of taken along line I-I of FIG. 8.
FIG. 11 is a top view of a nozzle plate of the unit nozzle assembly of FIG. 7.
FIGS. 12 to 15 are top views of a nozzle assembly of FIG. 1 whose injection-suction openings on a nozzle plate increase in number (cross-sectional area) according to the direction of steam flow.
FIG. 16 is an exploded perspective view of another example of a nozzle assembly of the reaction-type turbine of FIG. 1.
FIG. 17 is a top view of an assembled nozzle assembly of FIG. 16.
FIG. 18 is a cross-sectional view of a reaction-type turbine according to another exemplary embodiment of the present invention.
FIG. 19 is a cross-sectional view of a reaction-type turbine capable of bidirectional rotation motion, according to the present invention.
FIG. 20 is a perspective view of a single-stage reaction-type turbine according to an exemplary embodiment of the present invention.
FIG. 21 is a cross-sectional view taken along line II-II of FIG. 20.

### Mode for Invention

The invention is described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present.

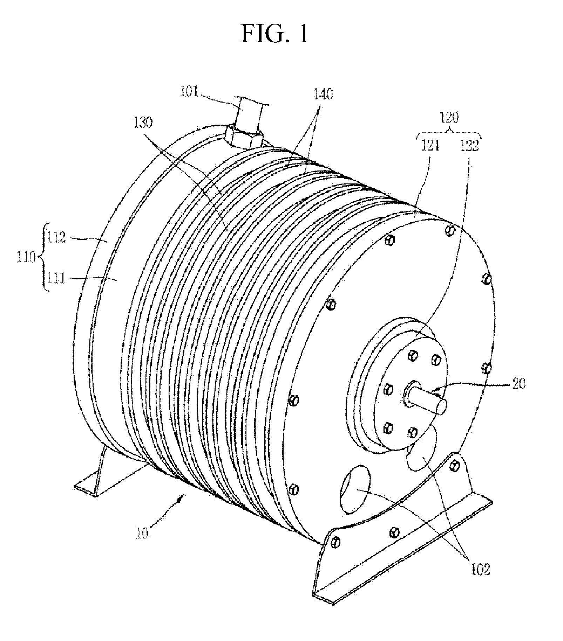

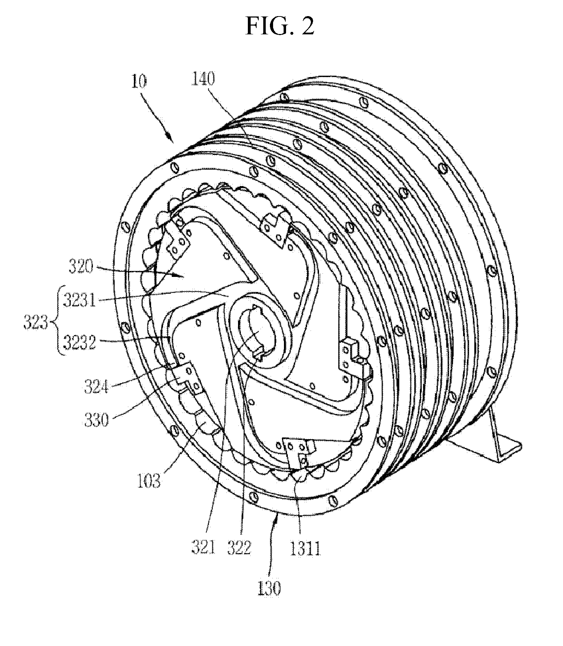

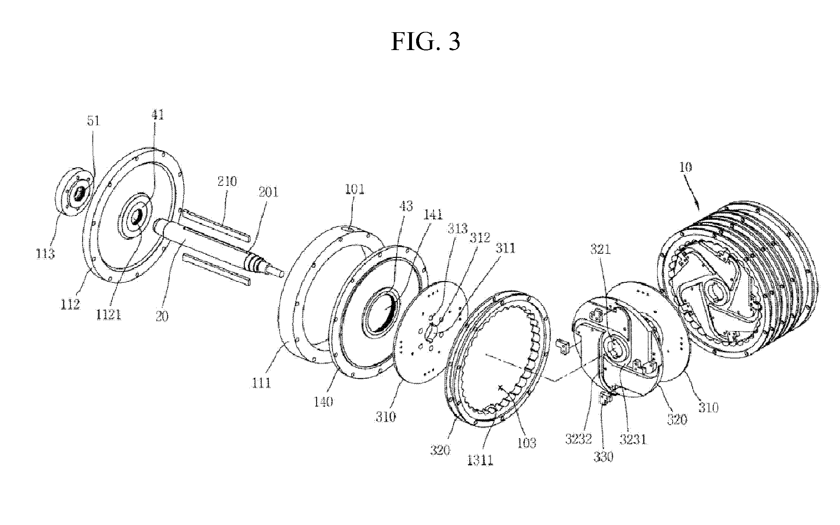

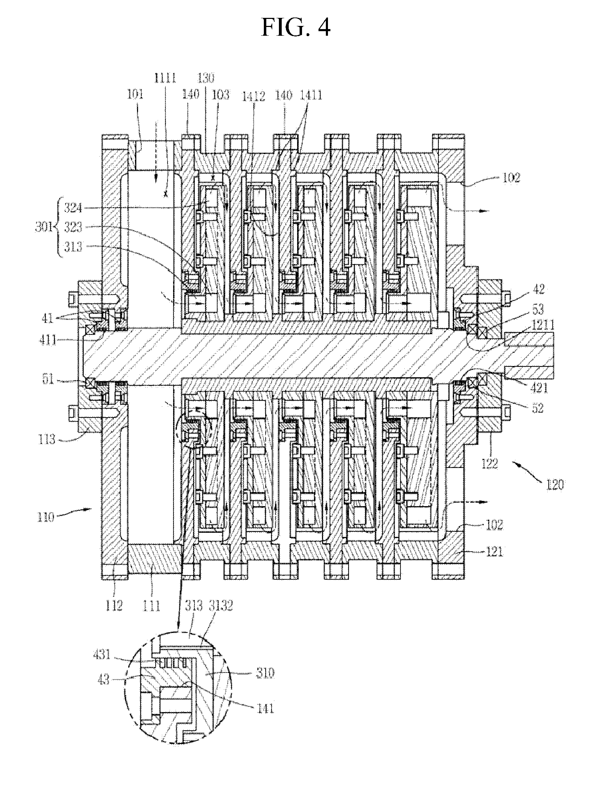

FIG. 1 is a perspective view of an exterior of a reaction-type turbine according to the present invention, FIG. 2 is a perspective view of a middle portion of the reaction-type turbine of FIG. 1, FIG. 3 is an exploded perspective view showing the reaction-type turbine of FIG. 1, and FIG. 4 is a cross-sectional view of the reaction-type turbine of FIG. 1.

As shown in drawings, the reaction-type turbine includes a housing 10 with a turbine shaft 20 rotatably coupled thereto and at least one nozzle assembly 30 with injection holes 301 for allowing a high-pressure steam, as a working fluid, to expand and thereby to generate rotational torque, and the at least one nozzle assembly is stacked along the shaft in the housing.

The housing 10 includes an inlet housing (hereinafter, referred to as a first housing) 110 with at least one housing inlet 101 to allow a steam to flow into the housing 10, an outlet housing (hereinafter, referred to as a second housing) 120 which is arranged at a predetermined distance with one side of the first housing 110 and has at least one housing outlet 102 to allow an expanding low-pressure steam to be discharged to the air or to be discharged for recycling, and at least one middle housing (hereinafter, referred to as a third housing) 130 interposed between the first housing 110 and the second housing 120, forming a housing passage (or expansion space) 103 to allow the nozzle assembly 30 to rotate.

The first housing 110 may be fabricated as a single body having one side with an inlet passage groove thereon and a shaft hole to support the turbine shaft in the center of the suction passage groove, or, as shown in FIGS. 1 to 4, the first housing 110 may be circular to have a suction space 1111 and include a suction housing 111 having one side with the housing inlet 101 penetrating therethrough, a front cover 112 having a shaft hole formed in the center thereof and covering one side of the suction housing 111 to form the suction space 1111, and a bearing cover 113 coupled to one surface of the front cover 112 and having a first bearing 51 coupled thereto, thereby being fixed to the front cover 112.

The suction housing 111 may be circular to form a circular suction space 1111, and the housing inlet 101 may be formed to have a smaller cross section than that of the housing outlet 102.

The front cover 112 is in the shape of a disk with the area enough to cover the suction space 1111 of the suction housing 111, and has the shaft hole 1121 penetrating the center thereof. A first sealing member 41 is coupled to an inner circumference of the shaft hole 1121 to seal a space between the suction space and an outer circumference of the turbine shaft 10. The first sealing member 41 may be formed of a self-lubricative material, and include labyrinth seal 411 on the inner circumference thereof to prevent the leakage of a high-pressure steam in the process of flowing into the suction space 1111.

The bearing cover 113 is larger than the shaft hole 1121 of the front cover 112 so as to be coupled to one side of the front cover 112, and has the first bearing 51 fixedly installed on an inner circumference thereof to support one end of the turbine shaft 20 in a radial direction.

The second housing 120 includes a discharge cover 121 having at least one housing outlet 102 and a shaft hole 1211 formed on the center thereof, and a rear cover 122 coupled to one side of the discharge cover 121 to support the turbine shaft 20 in an axial direction.

The discharge cover 121 is in the shape of a disk having the shaft hole 121 formed in the center thereof, and the at least one housing outlet 102 is formed near the shaft hole 121.

A second sealing member 42 is coupled to an inner circumference of the shaft hole 121 to seal a space between the housing passage (expansion space) 103 and the outer circumference of the turbine shaft 20. The second sealing member 42 may be formed of a self-lubricative material, and include labyrinth seal 421 to prevent the high-pressure steam flowing in the expansion space 103 from leaking to the outside of the housing 10. A second bearing 52 is fixedly coupled to one side of the discharge cover 121, that is, the outer side of the sealing member 42, to support the other end of the turbine shaft 20 in a radial direction.

The rear cover 122 is larger than the shaft hole 1211 of the discharge cover 121 so as to be coupled to one surface of the discharge cover 121, and has a third bearing fixedly installed in an inner surface thereof to support the turbine shaft 20 in an axial direction.

Each third housing 130 is circular, and is coupled together with a separation plate 140, which will be described later, the front cover 112 and the discharge cover 121 by bolts. In the center portion of the third housing 130, a housing passage 103 has a diameter larger than an external diameter of the nozzle assembly 30, thereby housing the nozzle assembly 30 and allowing the working fluid to flow.

The thickness of the one or more third housings 130 may increase in the direction from the first housing 110 towards the second housing 120 such that the volume of nozzle assemblies can increase from the inlet side to the outlet side.

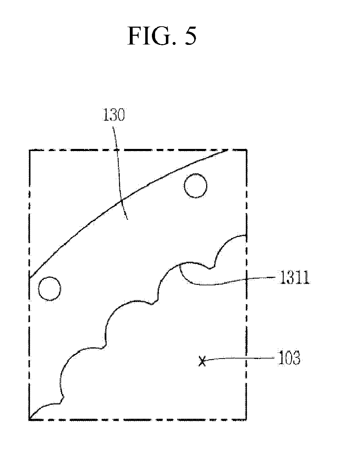

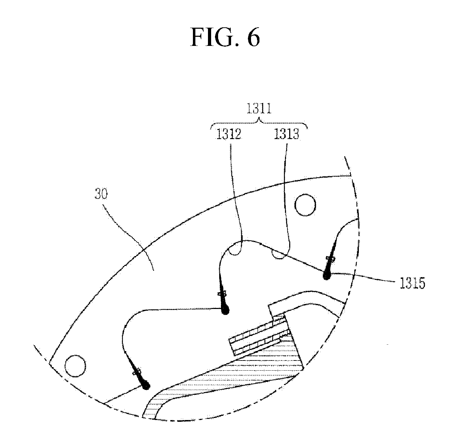

In addition, a plurality of collision walls 1311 may be formed consecutively along a circumferential direction of an inner circumference of the housing passage 103, that is, an inner circumference of the third housing 130, as shown in FIG. 5, such that the fluid injected through the injection holes 301 of the nozzle assembly 30 collides with the collision walls 1311 and thereby produce a repulsive force. The collision walls 1311 may vary in shape, and for example, may be formed to only have a rounded surface with a smaller radius of curvature than a radius of curvature of the housing passage 103, and may be formed to be stepped or to have both a rounded surface 1312 and a flat surface 1313 extending from one end of the rounded surface 1312 as shown in FIG. 6.

In the case where the collision wall 1311 includes the rounded surface 1312 and the flat surface 1313, the flat surface 1313 may be formed along a rotational direction of the nozzle assembly 30. The rounded surface 1312 of the collision wall 1311 may be formed to be concentric with the third housing 130 as shown in FIG. 5, or may be formed to be eccentric with respect to the center of the third housing 130 and eccentric to the direction of rotation of the nozzle assembly 30, in consideration of the injection holes 301 on the nozzle assembly 30.

If a radius of curvature of the collision wall 1311 is excessively small, most steam moves towards the center of the nozzle assembly 30, resulting in obstructing the rotation of the nozzle assembly 30. On the contrary, if a radius of curvature of the collision wall 1311 is too large, steam moves outside of the housing 10, which does not contribute much to the rotation of the nozzle assembly 30. Thus, it may be desirable to form the collision walls 1311 to have the radius of curvature within a range as described above.

In addition, a blade 1315 may be coupled via a screw to one end of the collision wall 1311, that is, an end of the rounded surface 1312 opposite to the flat surface 1313, such that the steam is prevented from leaking between the nozzle assembly 30 and the third housing 130 and thus the impact force of the steam to the collision wall 1311 is increased. The thickness of the blade 1315 may increase towards the nozzle assembly 30.

The separation plates 140 are provided to both sides of the third housing 130 to form the housing passage 103. The separation plates 140 may be coupled to the front cover 112 and the discharge cover 121, together with the third housing 130. Each of the separation plates 140 has a through-hole 141 on the center thereof to allow the nozzle cover 130 to be rotatably inserted therethrough.

A third sealing member 43 is fixedly installed on an inner circumference of the through-hole 141 to prevent the steam from leaking from the suction space 1111 or the inlet-side housing passage 103 into the outlet-side housing passage 103. A labyrinth seal 431 may be used on an inner circumference of the third sealing member 43, as described above.

Furthermore, each separation plate 140 may have supporting projections 1411 on both surfaces to support the third housing 130 in a radial direction, and a passage groove 1412 is formed on one side of the separation plate 140 in a direction toward the housing outlet to form the housing passage 103 together with the third housing 130, and is connected to an injection-suction opening 313 of the outlet-side nozzle assembly 30.

The turbine shaft 20 has a number of key engaging slots 201 disposed on the center thereof and extending along an axial direction thereof, and long-plate-shaped keys 210 extending in the axial direction are inserted and fixed into the respective key engaging slots 201.

The capacity of the turbine may vary with the number of nozzle assemblies 30 coupled to the turbine shaft 20. In other words, the smaller the capacity of the turbine is, the smaller number of nozzle assemblies 30 are provided, and the greater the capacity of the turbine is, the more number of nozzle assemblies 30 are arranged.

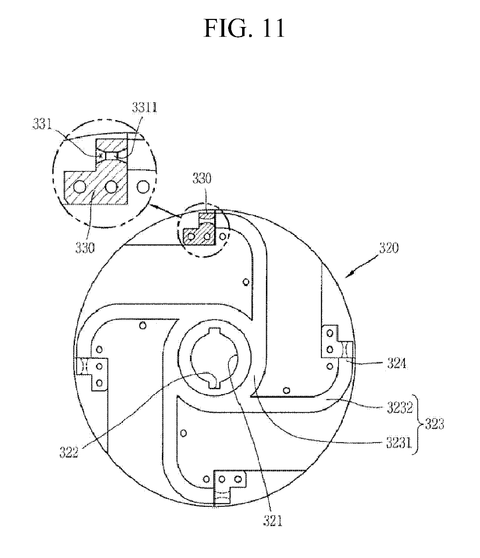

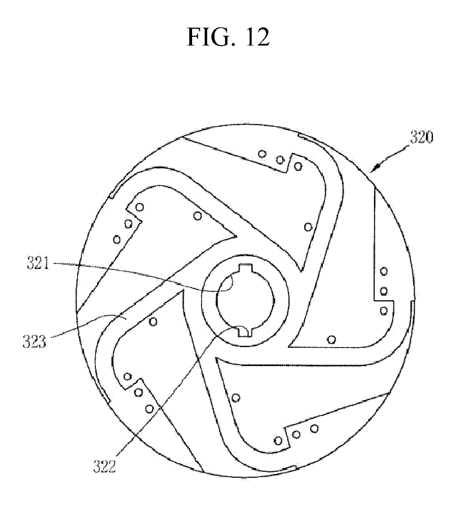

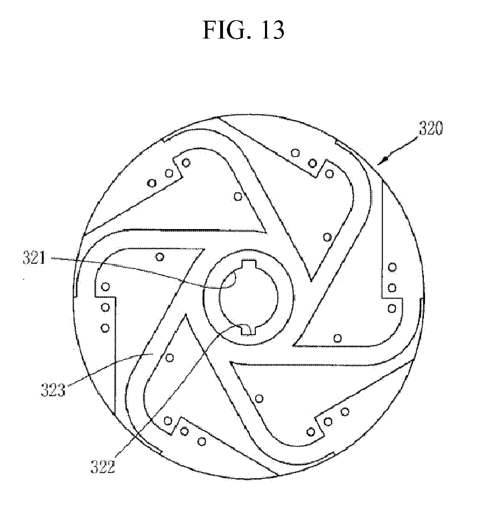

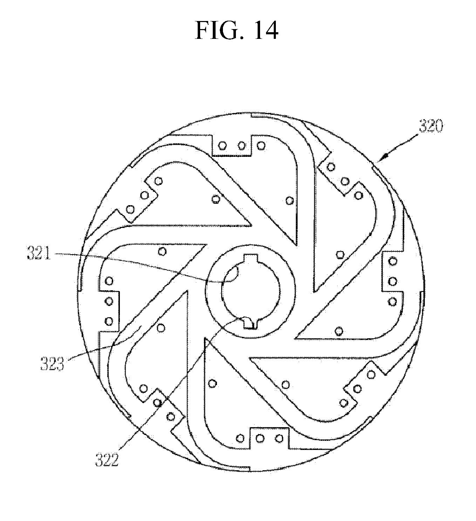

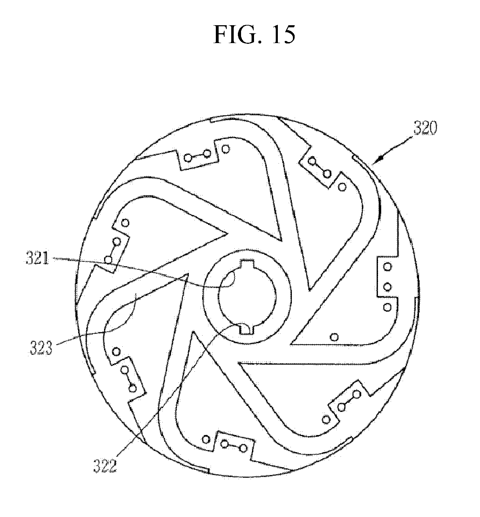

In a case where a plurality of nozzle assemblies 30 are provided, the total area or the number of the injection holes 301 on each nozzle assembly 30 may increase from the inlet side to the outlet side in consideration of the fact that the working fluid expands as it flows toward the outlet. For example, as shown in FIGS. 11 to 15, if there are five nozzle assemblies 30 are present, the number of injection holes 301 on each nozzle assembly 30 may increase by one. More specifically, when FIG. 14 illustrates a fourth nozzle assembly and FIG. 15 illustrates a fifth nozzle assembly, referring back to FIG. 4, the fifth nozzle assembly has deeper injection holes 301 than those of the fourth nozzle assembly, and hence, even though the number of the injection holes 301 of the fifth nozzle assembly is smaller by one than the number of injection holes of the fourth nozzle assembly, the actual total cross-sectional area of the injection holes 301 of the fifth nozzle assembly is more expanded as compared to the fourth nozzle assembly.

If there are a number of the injection holes 301, the injection holes 301 are identical in shape and arranged at regular distances, and thereby eccentric load can be reduced, resulting in an increase of turbine performance.

A plurality of key grooves 201 with a predetermined length in a lengthwise direction of the turbine shaft 20 are arranged at regular intervals on an inner circumference of the nozzle assembly 30 along the circumferential direction so as to allow the keys on an outer circumference of the turbine shaft 20 to be inserted and coupled therein.

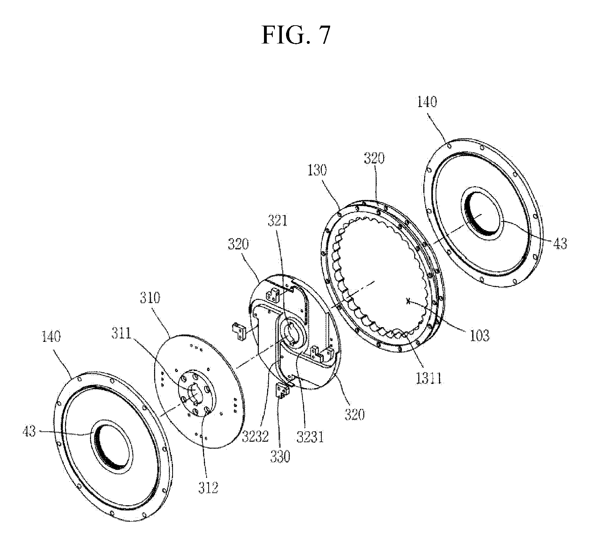

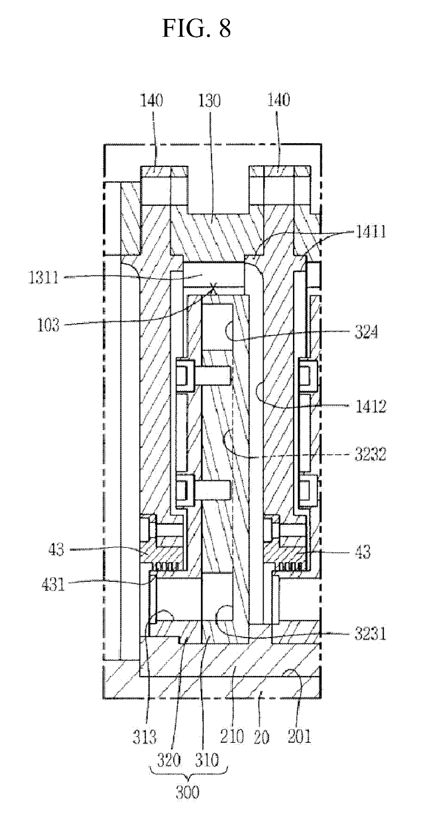

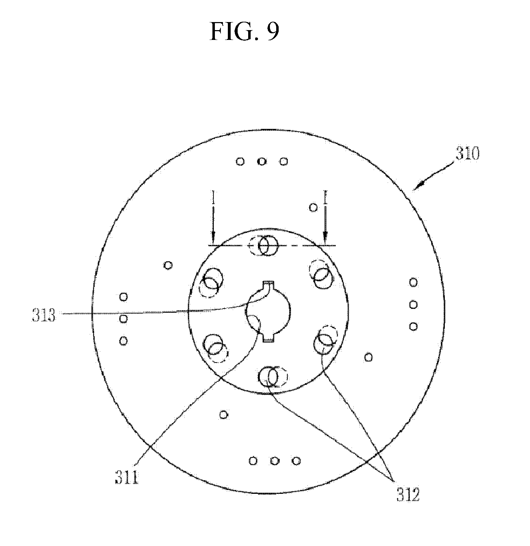

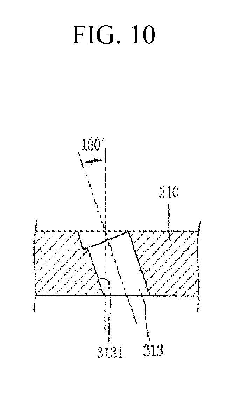

FIG. 7 is an exploded perspective view of a unit nozzle assembly of the reactor-type turbine shown in FIG. 1, FIG. 8 is a cross-sectional view of assembled unit nozzle assemblies of FIG. 7, FIG. 9 is a top view of a nozzle cover of the unit assembly of FIG. 7, FIG. 10 is a cross-sectional view of taken along line 1-1 of FIG. 8, and FIG. 11 is a top view of a nozzle plate of the unit nozzle assembly of FIG. 7.

As shown in drawings, each nozzle assembly 30 includes the nozzle cover 310 with the injection-suction openings 313 formed thereon as openings of the respective injection holes 301, and a nozzle plate 320 coupled to one surface of the nozzle cover 310 and having an injection connect opening 323 and injection discharge openings 324 which are consecutively arranged thereon to be connected to the injection-injection-suction openings 313.

The nozzle cover 310 is in the shape of a disk and has a shaft hole 311 in the center thereof to allow the turbine shaft 20 to be inserter and coupled therein, and an inner circumference of the shaft hole 311 includes key grooves 312 to allow the respective keys 210 of the turbine shaft 20 to be inserted and coupled therein. In addition, at least one or more injection-suction openings 313 are arranged at regular intervals around the shaft hole 311 and, desirably, in a circumferential direction.

The injection-suction openings 313 may be formed along an axial direction, but, it may be desirable that, with consideration of the rotation of the nozzle assembly 30, the injection-suction openings 313 may have inclined planes 3131 sloping at a predetermined angle to the rotational direction of the nozzle assembly 30, as shown in FIGS. 9 and 10, since the inclined planes 3131 may allow the smooth injection of the working fluid. In addition, a guiding portion 3132, such as a blade or a guiding groove, may be provided on an inlet or an inner circumference of each injection-suction opening 313 to allow the working fluid to be smoothly sucked into the nozzle assembly 30.

The nozzle plate 320 is formed as a disk of generally the same diameter as the nozzle cover 310, having a shaft hole 321 in the center thereof to allow the turbine shaft 20 to be inserted and coupled therein, and key grooves 322 are arranged at positions on an inner circumference of the shaft hole 321 corresponding to the key grooves 312 of the nozzle cover 310. In addition, the injection connect opening 323 are formed around and extends outwardly from the shaft hole 321 toward an outer circumference of the nozzle plate 320.

The injection connect opening 323 includes a ring-shaped first injection connect opening 3231 and second injection openings 3232 extending linearly from the first injection connect opening 3231 towards the injection discharge openings 324. The first injection connect opening 3231 is spaced a predetermined distance apart from a center of the nozzle plate 320 to be placed at a position generally corresponding to a position of the injection-suction opening 313 such that it can be connected to the injection-suction opening 313 in an axial direction of the turbine shaft, and the second injection connect openings 3232 are connected, in a tangential direction, to and extend outwardly from the first injection connect opening 3231 towards the outer circumference of the nozzle plate 320, and each has an end curved towards the injection discharge opening 324.

The cross-section of the injection discharge opening 324 may be placed at an angle with respect to a tangent line of the nozzle assembly 30, that is, in a direction perpendicular to the tangent line at a point corresponding to the injection discharge opening 324, such that the injection discharge opening 324 can inject a steam in the tangential direction.

In addition, a nozzle 330 having a nozzle hole 331 is detachably coupled via a bolt or a rivet with an end of the injection discharge opening 324. The nozzle hole 331 of the nozzle 330 may include a diameter-reduced portion 3311 between an inlet and an outlet thereof to increase an injection speed.

The operation of the reaction-type steam turbine according to the present invention as described above will be described below.

A high-pressure steam generated by a boiler is fed to the housing inlet 101 of the housing 10 through one or more pipes, and the steam passing through the suction space 1111 is injected into the injection-suction openings 313 and is guided to the first injection connect opening 3231. In this case, the injection-suction openings 313 are arranged at an angle with respect to the rotational direction of the nozzle assembly 30, so that the steam can flow quickly into the first injection connect opening 3231 along the inclined planes 3131 of the injection-suction openings 313.

The high-pressure steam flowing into the first injection connect opening 3231 is distributed over the individual second injection connect openings 3232, thereby moving quickly towards the injection discharge openings 324, and then is injected at high speed into the housing passage (expansion space) 103, which is formed by the third housing 130 and the separation plate 140, through the nozzle holes 331 of the nozzles 330 of the respective injection discharge openings 324. In this case, the collision walls 1311 are arranged in the inner circumference of the third housing 130 such that the high-pressure steam discharged from the nozzle assembly 30 can collide with the collision walls 1311, thereby generating a strong repulsive force, which may lead to an increase in a propelling power of the rotating nozzle assembly 30.

The steam injected from the nozzle assembly 30 into the housing passage 103 moves along the passage groove 1412 toward the center of the separation plate 140 provided on a side of the nozzle assembly 30, and is guided into the injection-suction opening 313 of the outlet-side nozzle assembly 30. The steam guided into the injection-suction opening 313 may repeatedly undergo the same processes until it is discharged through the injection discharge opening 324 of a rearmost nozzle assembly 30 into a rearmost housing passage 103 that is formed by the rearmost third housing 130 and the separation plate 140. In addition, the steam discharged into the rearmost housing passage 103 may expand again and undergo the same processes as described above, whereby it is discharged through the housing outlet 102 of the discharge cover 121 to the outside of the turbine 10.

The torque generated by the nozzle assembly 30 injecting a high-pressure steam in a circumferential direction is delivered to the turbine shaft 20 coupled to the nozzle assembly 30, and the turbine shaft 20 transfers the torque to the outside of the turbine 10 while rotating together with the nozzle assembly 30.

Here, the turbine shaft 20 is supported at both ends in a radial direction by the first bearing 51 coupled to the bearing cover 113 and the second bearing 52 fixed onto the discharge cover 121, and supported in an axial direction by the third bearing 53 fixed onto the rear cover 122, thereby enabling to stably rotate at high speed.

Since the high-pressure steam injected into the housing 10 sequentially passes through the plurality of nozzle assembles 30, a pressure difference is generated between the expansion spaces 103, each housing the nozzle assembly 30. Owing to the pressure difference, the steam may leak from the inlet-side expansion space with a higher pressure to the outlet-side expansion space with a lower pressure, but thanks to the sealing members 41, 42, and 43 installed, respectively, on inner circumferences of the front cover 112 and the discharge cover 121 of the housing 10 and the separation plates 140, the leakage of the steam between the housing passages or to the outside is prevented, thereby improving energy efficiency of the turbine.

In addition, the turbine capacity is decided according to the number of unit turbines, each including the nozzle assembly, and thereby it is easy to fabricate turbines with difference capacities, and it is also easily feasible to reduce the manufacturing cost since common parts for manufacturing the turbines of different capacities can be compatibly used.

Furthermore, due to the injection holes 301 of the nozzle assembly 30 being designed to be long and curved, the injection speed of the steam from the injection holes 301 is increased, resulting in significantly improving efficiency relative to size of turbine.

Another embodiment of the nozzle assembly included in the reaction-type turbine will now be described below.

In the previous embodiment, the nozzle assembly includes the nozzle cover and the nozzle plate, nozzle holes formed as grooves are arranged on a contacting surface of the nozzle plate or on each contacting surface of the nozzle cover and the nozzle plate, whereas in the present embodiment, nozzles are installed between the nozzle cover and the nozzle plate and the nozzles each has a nozzle hole.

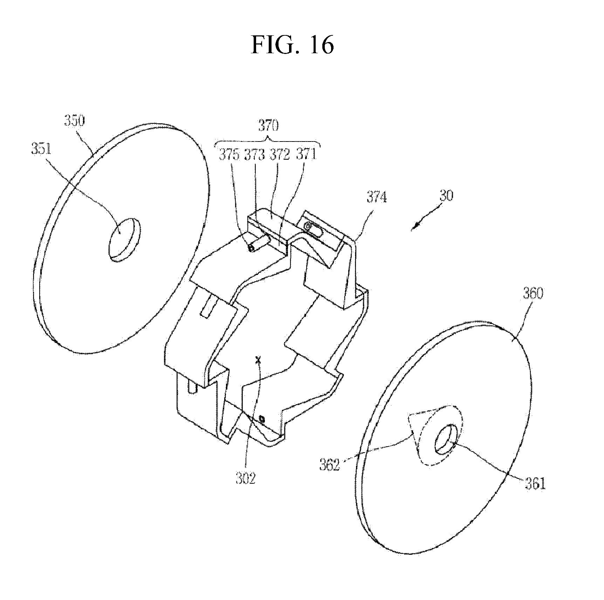

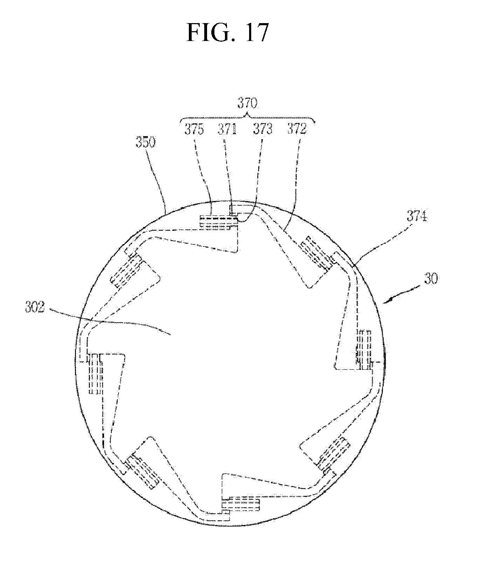

FIG. 16 is an exploded perspective view of a nozzle assembly included in the reaction turbine of FIG. 1 according to another embodiment of the present invention, and FIG. 17 is a top view of the assembled nozzle assembly of FIG. 16.

As shown in FIGS. 16 and 17, the nozzle assembly 30 includes a nozzle cover 350 as a first plate member, a nozzle plate 360 as a second plate member disposed on one surface of the nozzle cover 350, and a nozzling unit 370 as a ring member that is coupled between the nozzle cover 360 and the nozzle plate 360 to form a sealed injection space 302 therewith.

The nozzle cover 350 and the nozzle plate 360 each is in the shape of a disk, and the nozzle cover 350 has a injection-suction opening penetrating in the center thereof, whereas the nozzle plate 360 has a shaft hole 361 formed in the center thereof to allow the turbine shaft 20 to be inserted and coupled thereto. A projection 362 is arranged on an inner surface of the nozzle plate 360 to house the shaft hole 361 and disperse the steam flowing through the injection-suction opening 351 toward an injection discharge opening 373. The projection 362 may have a rounded conical shape tapered towards the injection-suction opening.

The nozzling unit 370 includes pairs of housing walls, that is, an injection wall 371 and a supporting wall 372, which are arranged successively along a conferential direction, appearing like a saw-tooth shape, and the injection walls 371 and the supporting walls 372 form a hollow injection space 302. The injection space 302 is not divided by partitions, but is formed as a single space. Thus, most steam can be discharged from the injection space 302 to the outside, whereby the reaction-type turbine can have an increased efficiency and a simple structure. The injection walls 371 and the supporting walls 372 may be fabricated as different elements and assembled later with each other, or may be integrated as a single unit. Such integration of walls may be beneficial in terms of fabrication process.

The injecting walls 371 are disposed in a radial direction with respect to a center of the nozzling unit 370, that is, the axial center of the turbine shaft 20, and the supporting walls 372 are inclined at a predetermined angle in such a manner that each of supporting walls 372 is connected from an outer end of a forward injection wall to an end of a rearward injection wall.

Each of the injecting walls 371 includes an injection discharge opening 373. The injection discharge opening 373 is formed in perpendicular to the injecting wall 371. A nozzle with a predetermined length in perpendicular to the injecting wall 371 is coupled to the injection discharge opening 373. The nozzle 375 may be coupled via an additional bolt or directly coupled to the injection discharge opening 373 via a screw so as to increase its endurance for the high-pressure steam. The nozzling unit 370 may be selectively assembled with a nozzle 375 having a constricted portion with a reduced inner diameter, according to circumstances, as described above.

Each of the supporting walls 372 includes a rounded surface or an inclined surface, and by adjusting a radius of curvature of the supporting walls 372, the use efficiency of steam discharged from the nozzle (or the injection discharge opening) 375 can be increased. More specifically, since the steam discharged from the nozzle 375 flows along the supporting walls 372, a direction in which the steam is discharged is affected by outer rounded surfaces 374 of the supporting walls 372. Therefore, a radius of curvature of the supporting walls 372 may be adjusted to range, desirably, from 0.5 mm to 7.5 mm. Too small a radius of curvature of the supporting walls 372 may cause failure in guiding the steam along a rotational direction of the nozzle assembly 30, and thereby the steam directly strikes the supporting walls 372, which hinders the maximum rotational torque of the nozzle assembly 30. In contrast, too large a radius of curvature of the supporting walls 372 may cause the outer rounded surfaces 374 of the supporting walls 372 to be interfered by the collision walls 1311. Thus, it may be desirable to adjust the radius of curvature of the supporting walls 372 to the above-described range.

The steam discharged from the nozzle 375 can be guided mostly only to a space between the nozzle cover 350 and the nozzle plate 360 by fabricating the nozzle cover 350 and the nozzle plate 360 to have larger diameters than the diameter of the nozzling unit 370. The guided steam applies a pressure only in a rotational direction of the nozzling unit 370, thereby increasing the mechanical energy required for the rotation of the nozzle assembly 30.

The effects of the nozzle assembly according to the embodiment of the present invention are similar to those of the nozzle assembly according to the aforementioned embodiment of the present invention, and thus detailed description thereof will not be reiterated. However, in the present embodiment illustrated in FIGS. 16 and 17, unlike the aforementioned embodiment, the injection space 302 as a first injection connect opening is formed large and directly connected to the injection discharge opening 373, which may result in an increase of a flow passage resistance or first expansion of steam, thereby deteriorating the turbine efficiency, whereas it is easy to assemble and maintain the nozzle assembly with a simple structure. Moreover, a clog of the injection nozzles can be prevented, thereby improving the stability and safety of the nozzle assembly.

### Best Mode

Other embodiments of the reaction-type turbine according to the present invention will be described below.

The reaction-type turbine according to the embodiment discussed above includes the housing inlet disposed at one end with respect to the turbine shaft and the housing outlet disposed at the other end, whereas the reaction-type turbine according to the present embodiment includes a housing inlet in the center with respect to a turbine shaft and housing outlets disposed at both ends.

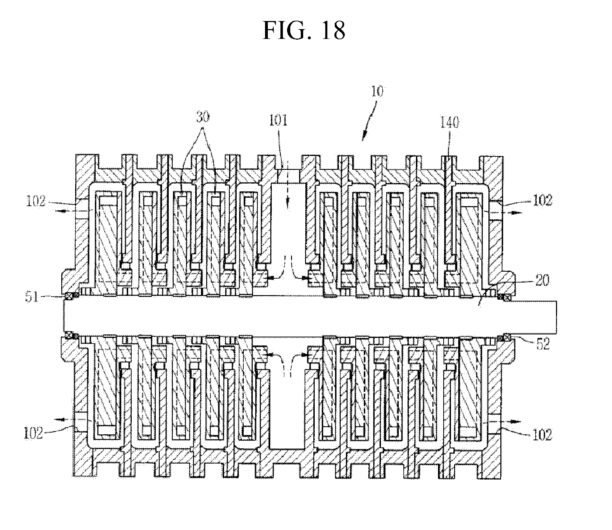

FIG. 18 is a cross-sectional view of a reaction-type turbine according to another embodiment of the present invention. As shown in FIG. 18, the reaction-type turbine includes a housing inlet 10, housing outlets 102 provided at each side of the housing inlet, and housing passages 103, each independently connecting the housing inlet and the housing outlets. The housing inlet 101 is centrally located relative to a turbine shaft 20, whereas the housing outlets 102 are disposed at each side of the turbine shaft 20 in such a manner that the housing outlets 102 are placed at axial symmetric positions around the housing inlet 101.

As shown in FIG. 18, there may be a single housing inlet 101 which branches to the housing passages 103 at both sides, and, in another example, there may be a number of housing inlets 101 which are connected to the respective housing passages 103.

In addition, the number and the size of the nozzle assembles 30 may be provided to be symmetric around the housing inlet 101, such that an axial thrust force of the turbine shaft 20 can be offset, thereby preventing the turbine shaft 20 from leaning to one side.

Since the basic configuration of the reaction-type turbine according to the present embodiment is generally similar to that of the reaction-type turbine discussed above and the effects derived from the present embodiment include the effects from the above-described embodiments and the effects expected from the conventional turbines, the detailed descriptions of the configuration and effects will not be reiterated. However, the arrangement of the centrally disposed housing inlet and the housing outlets disposed at each ends offsets the axial thrust force of the turbine shaft, thereby reducing vibration of the reaction-type turbine and friction loss, and thus improving the turbine performance.

Another embodiment of the reaction-type turbine according to the present invention will be described below.

In the embodiments discussed above, the nozzle assemblies are installed at both sides of the housing inlet and the nozzle assemblies can rotate in the same direction, whereas in the present embodiment, the nozzle assemblies installed at both sides of the housing inlet are enabled to rotate in opposite directions.

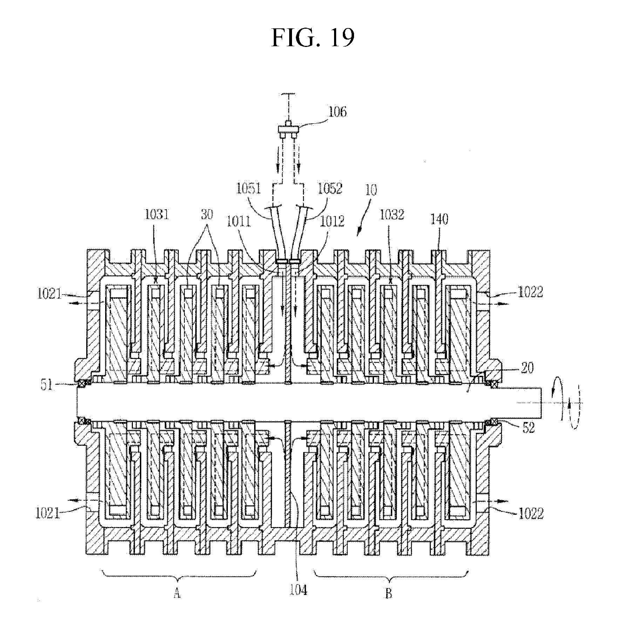

FIG. 19 is a cross-sectional view of a reaction-type turbine capable of bidirectional rotation motion, according to the present invention.

As shown in FIG. 19, the reaction-type turbine includes a housing passage partitioned into a first housing passage 1031 and a second housing passage 1032, and housing inlets and housing outlets are provided separately for each of the first housing passage 1031 and the second housing passage 1032.

To this end, a passage separating plate 104 is installed at the housing inlet to divide the housing inlet into a first housing inlet 1011 and a second housing inlet 1012, and a first housing outlet 1021 and a second housing outlet 1022 are formed at each end of the turbine shaft 20, corresponding to the respective first and second housing inlets 1011 and 1012.

In addition, the first housing inlet 1011 is connected with a first fluid supplying pipe 1051, the second housing inlet 1012 is connected with a second fluid supplying pipe 1052, and the first fluid feeding pipe 1051 and the second fluid feeding pipe 1052 are connected to one switch valve 106. The switch valve 106 is a three-way valve to control a direction of steam flow and thereby feed the steam in a desired direction. However, the first fluid feeding pipe 1051 and the second fluid feeding pipe 1052 may have individual switch valves 106 to independently control the steam flow direction.

The nozzle assembles 30 may be separately arranged in a first section A between the first housing inlet 1011 and the first housing outlet 1012 and a second section B between the second housing inlet 1021 and the second housing outlet 1022 in such a manner that the nozzle assemblies 30 arranged in the first and second sections A and B rotate in opposite directions to each other.

Since the basic configuration of the reaction-type turbine according to the present embodiment is generally similar to that of the reaction-type turbine discussed above and the effects derived from the present embodiment include the effects from the above-described embodiments, the detailed descriptions of the configuration and effects will not be reiterated. However, in the present embodiment, the housing passage is divided into the first housing passage and the second passage, and the first housing passage and the second housing passage include nozzle assemblies with injection holes formed in opposite directions. In addition, both the first fluid feeding pipe connected to the first housing inlet and the second fluid feeding pipe connected to the second housing inlet are connected to the switch valve to control the direction of steam flow, so that the rotational direction of the turbine shaft can be switched between forward rotation and backward rotation, which may expand the applications of the reaction-type turbine.

In addition, although not illustrated in drawings, if the nozzle assemblies are installed in opposite sides around a center of the turbine shaft, the housing inlet is placed at the center and the housing outlets are placed at each end of the turbine shaft as shown in FIGS. 18 and 19, and according to circumstances, housing inlets may be formed at each ends and the housing outlet may be formed at the center. The configuration and effects of the present embodiment are generally similar to those of the above-discussed embodiments, and thus the detailed description thereof will not be reiterated.

Another embodiment of the reaction-type turbine according to the present invention will be described below.

In the embodiments described above, the reaction-type turbine is a multistage turbine in which a plurality of nozzle assemblies are stacked in an axial direction of a turbine shaft, whereas in the present embodiment, a reaction-type turbine includes a single nozzle assembly and still can be applied reaction force of steam.

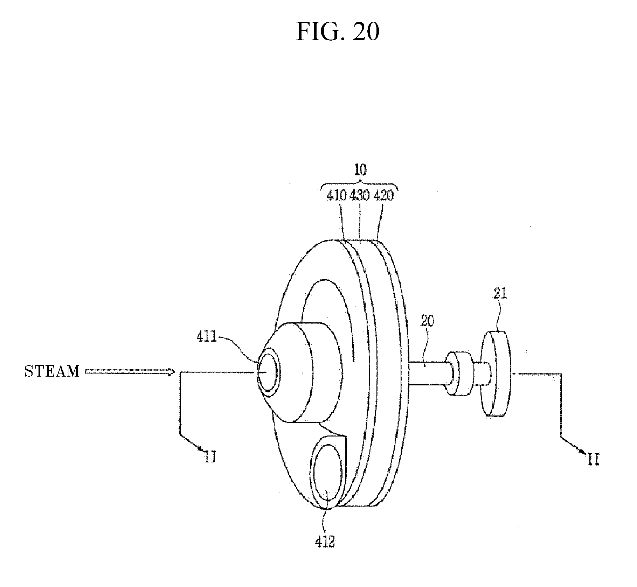

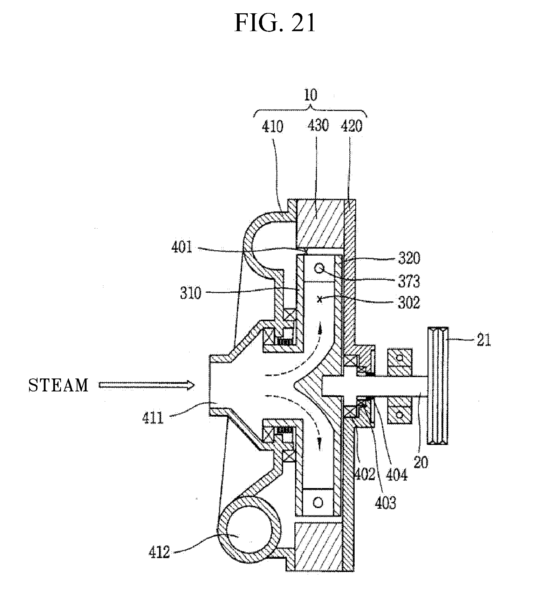

FIG. 20 is a perspective view of a single-stage reaction-type turbine according to an exemplary embodiment of the present invention, and FIG. 21 is a cross-sectional view taken along line II-II of FIG. 20.

As illustrated in FIGS. 20 and 21, the single-stage reaction-type turbine includes a housing 10 having an injection inlet 411 and an injection outlet 412, a turbine shaft 412 rotatably coupled to the housing 10, and a single nozzle assembly 30 integrally coupled to the turbine shaft 20 and rotatably housed inside the housing 10.

The housing 10 includes a first housing 410 disposed at a front side (for convenience of explanation, a direction from which a steam is injected is referred to as "forward"), a second housing 420 disposed at a rear side, and a third housing 430 arranged between the first housing 410 and the second housing 420 to form a housing passage (or an expansion space) 401 that allows a nozzle assembly 430 to be rotatably housed therein.

The first housing 410 has an injection inlet 411 formed at a center portion thereof in an axial direction of a turbine shaft and a cochlea-shape injection outlet 412 formed along a circumferential direction around the injection inlet 411.

The injection inlet 411 protrudes a predetermined length toward the front side, and bearings 402 and 403 are installed on an inner circumference and one surface of the injection inlet 411, respectively, to support the nozzle assembly 30 rotatably with respect to a radial direction and the axial direction. A sealing member 404 may be installed around the bearings 402 and 403 to seal a space between the injection inlet 411 and the injection outlet 412.

The second housing 420 includes a shaft hole 412 in a center portion thereof to allow a turbine shaft 20 to be inserted and coupled therein, bearings 405 and 406 are installed on an inner circumference of the shaft hole 421 to support the turbine shaft 20 rotatably with respect to the radial direction and the axial direction, and a sealing member 407 may be disposed around the bearings 405 and 406 to seal the housing passage 401.

The third housing 430 is ring-shaped, disposed and coupled between the first housing 410 and the second housing 420, and in another example, it may be integrated into an inner surface of the second housing 420. In addition, an inner circumference of the third housing 430 may be a smooth tube, or may have collision walls (1311 in FIGS. 5 and 6) as shown in FIGS. 5 and 6.

The nozzle assembly 30 may include two elements, the nozzle cover 350 and the nozzle plate 360, as shown in FIG. 7, or three elements, the nozzle cover 350, the nozzle plate 360, and the nozzling unit 370, as shown in FIG. 21.

The described-above embodiments can be applied to the nozzle assembly 30 in a similar manner to one another, and thus the detailed description thereof will not be reiterated.

In the single-stage reaction-type turbine according to the present embodiment, a steam is introduced into the injection space 302 of the nozzle assembly 30 through the injection inlet 411 along an axial direction. The steam flows radially due to the centrifugal force and the projections 362, and is injected from the injection discharge opening into the housing passage 401 of the housing 10, thereby rotating the turbine shaft 20. The turbine shaft 20 is coupled to a generator by a coupling 21, and rotates the generator, thereby producing electric power. In addition, the rotation of the turbine shaft 20 may enable the turbine to be used as a different power source.

The steam that has been used up in the housing 10 is discharged to atmosphere through the injection outlet 412. A diameter of the injection outlet 412 may be designed to increase toward an outlet end, thereby allowing the steam to be effectively discharged.

## Claims

1. A reaction-type turbine comprising:
a turbine shaft; and
a plurality of nozzle assemblies stacked in an axial direction of the turbine shaft and coupled and integrated to the turbine shaft, each nozzle assembly having at least one injection hole therein to inject a working fluid and rotating while injecting the working fluid.

2. The reaction-type turbine of claim 1, wherein the nozzle assembly includes a plurality of plates overlapping and coupled to one another and the at least one injection hole is formed on an overlapping surface.

3. The reaction-type turbine of claim 1, wherein the nozzle hole includes
an injection-suction opening connected to a housing inlet,
an injection discharge opening formed in a circumferential direction and connected to a housing outlet and
an injection connect opening connecting the injection-suction opening and the injection discharge opening, and
at least a part of the injection connect opening is rounded.

4. The reaction-type turbine of claim 3, wherein the injection-suction opening includes at least one hole and is inclined in an opposite direction to a rotational direction of the nozzle assembly.

5. The reaction-type turbine of claim 3, wherein a projection or a guiding portion formed as a groove is disposed around the injection-suction opening to guide a fluid towards the injection-suction opening.

6. The reaction-type turbine of claim 3, wherein the injection connect opening includes
a first injection connect opening connected to the injection-suction opening,
and at least one second injection connect opening, each having an end connected to the first injection connect opening and the other end connected to the injection discharge opening,
the first injection connect opening is ring-shaped, and
the second injection connect opening is connected to an outer circumference of the first injection connect opening in a tangential direction and is formed linearly, having a portion rounded toward the injection discharge opening.

7. The reaction-type turbine of claim 3, wherein the injection discharge opening is disposed in a direction perpendicular to a tangent line of the nozzle assembly at a point corresponding to the injection discharge opening.

8. The reaction-type turbine of claim 1, wherein the nozzle assembly is configured to comprise
a first plate member,
a second plate member, and
a ring member coupled between the first plate member and the second plate member, forming an injection space sealed by the first plate member and a second plate member, and having the at least one injection hole passing through an outer circumference of the injection space,
the ring member includes injection walls, each having the injection hole formed thereon, and a supporting wall connecting the injection walls, and
a direction in which a virtual line connecting the injection walls and a center of the ring member extends is substantially perpendicular to a direction in which the injection hole passes through.

9. The reaction-type turbine of claim 8, wherein the injection walls are radially disposed at regular intervals along a circumferential direction, and the supporting wall connects an outer circumference of an inlet-side injection wall and an inner circumference of an outlet-side injection wall.

10. The reaction-type turbine of claim 1, wherein a nozzle with a nozzle hole is detachably coupled to an end of the injection hole of the nozzle assembly.

11. The reaction-type turbine of claim 1, wherein a key groove is formed on either the nozzle assembly or the turbine shaft, and a key is formed on the other to be inserted in the key groove and supported in a rotational direction.

12. The reaction-type turbine of claim 1, wherein the nozzle assembly is housed in a housing to which the turbine shaft is rotatably coupled, the housing includes a housing inlet, a housing outlet, and a housing passage connecting the housing inlet and the housing outlet, the nozzle assembly is rotatably arranged in the housing passage, and an inlet and an outlet of each of the at least one injection hole are connected to the housing passage in such a manner that the housing passage and the at least one injection hole are arranged alternately.

13. The reaction-type turbine of claim 12, wherein a cross-sectional area of the injection hole of the nozzle assembly located in a side of the housing outlet is larger than a cross-sectional area of the injection hole of the nozzle assembly located in a side of the housing inlet.

14. The reaction-type turbine of claim 12, wherein a number of injection holes of the nozzle assembly located in a side of the housing outlet is greater than a number of injection holes of the nozzle assembly located in a side of the housing inlet.

15. The reaction-type turbine of claim 12, wherein the housing includes a first housing having the housing inlet, a second housing having the housing outlet, and a plurality of third housings stacked along an axial direction and interposed between the first housing and the second housing and having the housing passage rotatably housing the nozzle assembly, and separation plates are further disposed between neighboring housings to separate the nozzle assembly.

16. The reaction-type turbine of claim 15, wherein a thrust-direction thickness of the third housing increases from the first housing to the second housing.

17. The reaction-type turbine of claim 15, wherein a plurality of collision walls are formed on an inner circumference of the third housing, which forms the housing passage, along a circumferential direction that does not match with a direction in which a fluid is injected from the injection hole.

18. The reaction-type turbine of claim 15, wherein each of the plurality of collision walls includes a rounded portion and a radius of curvature of the rounded portion is smaller than a radius of curvature of the housing passage.

19. The reaction-type turbine of claim 15, wherein a flat portion extends from at least one side of the rounded portion.

20. The reaction-type turbine of claim 15, wherein a blade protruding towards the nozzle assembly is disposed on one side of the rounded portion.

21. The reaction-type turbine of claim 15, wherein a sealing member is disposed between the separation plates and the nozzle assemblies and the sealing member includes labyrinth seal.

22. The reaction-type turbine of claim 12, wherein the housing inlet and the housing outlet are disposed, respectively, at one end and the other end with respect to an axial direction.

23. The reaction-type turbine of claim 12, wherein the housing inlet is disposed in a center portion with respect to an axial direction and the housing outlet is disposed at each end with respect to the axial direction.

24. A reaction-type turbine comprising:
a housing including a housing inlet, a housing outlet and a housing passage connecting the housing inlet and the housing outlet to allow a high-pressure working fluid introduced through the housing inlet to flow to the housing outlet;
a turbine shaft rotatably coupled to the housing; and
at least one nozzle assembly rotatably housed in the housing passage, thereby being integrally coupled to the turbine shaft, having at least one injection hole for injecting the working fluid, and thereby being able to rotate,
wherein each of the at least one nozzle assembly includes a plurality of plates overlapping and coupled to one another and the injection hole is formed on an overlapping surface of the plates.

25. A reaction-type turbine comprising:
a housing including a housing inlet, a housing outlet and a housing passage connecting the housing inlet and the housing outlet to allow a high-pressure working fluid introduced through the housing inlet to flow to the housing outlet;
a turbine shaft rotatably coupled to the housing; and
at least one nozzle assembly rotatably housed in the housing passage, thereby being integrally coupled to the turbine shaft, having at least one injection hole for injecting the working fluid, and thereby being able to rotate,
wherein the housing includes a plurality of either or both of the housing inlet and the housing outlet and the plurality of either or both of the housing inlet and the housing outlet are arranged symmetrically around an axial direction of the turbine shaft.

26. The reaction-type turbine of claim 25, wherein the at least one nozzle assembly in a side of the housing inlet and in a side of the housing outlet rotate around the turbine shaft in a same direction.

27. The reaction-type turbine of claim 25, wherein the at least one nozzle assembly in a side of the housing inlet and in a side of the housing outlet rotate around the turbine shaft in opposite directions.

28. The reaction-type turbine of claim 27, wherein the housing includes a plurality of housing inlets, and a valve is provided to fluid feeding pipes connected to the respective housing inlets to control a direction of a working fluid flow and thereby to change a rotational direction of the turbine shaft.

29. A reaction-type turbine comprising:
a housing including a housing inlet, a housing outlet and a housing passage connecting the housing inlet and the housing outlet to allow a high-pressure working fluid introduced through the housing inlet to flow to the housing outlet;
a turbine shaft rotatably coupled to the housing; and
at least one nozzle assembly rotatably housed in the housing passage, thereby being integrally coupled to the turbine shaft, having at least one injection hole for injecting the working fluid, and thereby being able to rotate,
wherein the housing inlet is formed at a rotational center of the nozzle assembly in an axial direction and the housing outlet is placed at a position of an outer circumference of the nozzle assembly, winding in a circumferential direction.

30. The reaction-type turbine of claim 29, wherein a projection with a cross-sectional area thereof decreasing toward the housing inlet is arranged at the rotational center of the nozzle assembly to guide the working fluid, which is introduced in an axial direction from the housing inlet, in a radial direction.

31. The reaction-type turbine of claim 30, wherein each of the at least one nozzle assembly is configured to comprise
a first plate member,
a second plate member, and
a ring member coupled between the first plate member and the second plate member, forming an injection space sealed by the first plate member and a second plate member, and having the at least one injection hole passing through an outer circumference of the injection space,
the ring member includes injection walls, each having the injection hole formed thereon, and a supporting wall connecting the injection walls, and
a direction in which a virtual line connecting the injection walls and a center of the ring member extends is substantially perpendicular to a direction in which the injection hole passes through.

32. The reaction-type turbine of claim 31, wherein the injection walls are radially disposed at regular intervals along a circumferential direction, and the supporting wall connects an outer circumference of an inlet-side injection wall and an inner circumference of an outlet-side injection wall.

33. The reaction-type turbine of claim 30, wherein the nozzle assembly is configured to comprise a first plate member and a second plate member overlapping and coupled to the first plate member, and the injection hole is disposed on an overlapping surface of the second plate member.

34. The reaction-type turbine of claim 30, wherein a nozzle with a nozzle hole is detachably coupled to an end of the injection hole of the nozzle assembly.
